# EUROPEAN PATENT APPLICATION

(11) **EP 0 832 596 A1**
(43) Date of publication of application: **01.04.1998**
(21) Application number: 97113989.4
(22) Date of filing: 13.08.1997
(51) Int. Cl.: A47J 47/00

(54) **Device for chopping thereon food materials**

(30) Priority: 29.08.1996 JP 245417/96; 07.03.1997 JP 1964/97
(71) Applicant: Matsuo, Yoshisuke, Chiba-ken (JP)
(72) Inventor: Matsuo, Yoshisuke, Chiba-ken (JP)
(74) Representative: Popp, Eugen, Dr.

(57) **Abstract**

The device has a reversible chopping board (10) having flat chopping surfaces on both sides thereof and a tray (20) for detachably supporting the board. Support members (24) are formed internally of a first pair of longer opposed walls (22a) of the tray to support the board (10) thereon. Guide members (23) are formed internally of a second pair of shorter opposed walls (22b) to guide the board into a predetermined position. The guide members have surfaces (23a) slightly lower than the surfaces (24a) of the support members (24). Any liquid overflowing the board is introduced through interstices between the support members (24), around the board and into an internal space (25) of the tray.

## Description

### BACKGROUND OF THE INVENTION

The present invention relates to a device for use in chopping, hashing, mincing, cutting, slicing meat, fish, vegetables, bread and other food materials. Such a device has been known typically as a chopping board or block.

Generally, the prior art chopping board is a wooden or plastic board having substantially flat surfaces on both, sides. Such a reversible type chopping board has become popular because two opposite surfaces can be used for different food materials. For example, a first chopping surface on one side of the board is used to cut or mince meat thereon and then the board is reversed to expose another, second chopping surface on the other side on which salad vegetables can be chopped up. Some minced chips and smelling of meat or fish would remain on the first chopping surface, but does not affect cleanliness and freshness of the salad vegetables when being chopped up on the second chopping surface.

The prior art chopping board is, in use, placed on a kitchen sink or dresser. This means that the bottom surface of the chopping board, which will be used as the second chopping surface afier the board is reversed, is in direct contact will, a rest level or a surface of the kitchen sink or dresser that could be dirty and unclean. If the rest level is contaminated by colon bacilli, the bottom surface of the board could also be contaminated while the first chopping board is used to chop the first material, so that any person who eat the second material (particularly salad vegetable without any heat processing) chopped on the contaminated second chopping surface would be attached by colitis or food poisoning. Thus, in order that the prior art reversible type chopping board is used with a sufficient level of sanitariness, it is necessary to carefully wash the bottom of the board before this is actually used as a second chopping board.

Moreover, when the chopping board is reversed after meat or fish is hashed on the first chopping surface, then the first chopping becomes into contact with the rest level and contaminates the same. When wet vegetables or juicy fruits are chopped on the first chopping surface of the board, a large quantity of water and juice appearing from the chopped materials tends to overflow from the first chopping surface and could be stagnant around the board, which would unsanitize the bottom of the board and the sink top around the board.

After the chopping board is used for chopping food materials thereon, it is washed for the next use. However, the user of the prior art chopping board is sometimes distressed to find where and how to place or stand the wet board. If the wet board is simply placed on the sink top, the bottom would be again contaminated. The bottom of the board being in contact with the sink top is hard to be dried and therefore tends to be musty. These drawbacks may be eliminated by leaning or standing the wet board against any upstanding wall of the kitchen sink or dresser, but the board in such a standing condition is unstable and easily fell down or slipped down by a slight force, vibration or contact applied thereto. There have been proposed many kinds of holders for partly or wholly receiving the chopping board. Use of such holder is sometimes convenient but requires a relatively large area for storage of the board. The board can not be used as far as it remains received by the prior art holder.

For use in outdoor cooking, usually, the prior art chopping board is placed directly on a bare ground. In view of sanitariness, the bottom of the board that has been in contact with the unclean ground should not be used as the second chopping surface.

Furthermore, the prior art chopping board placed and adhered onto the sink top or dresser is not easy to be lifted up by hands. The reversible type chopping board can not be provided with anti-skid means.

### SUMMARY OF THE INVENTION

Accordingly, an object of the present invention is to provide a novel device for chopping thereon food materials capable of eliminating drawbacks of the prior art chopping boards and blocks.

Another object of the present invention is to provide a device for chopping thereon food materials which is convenient and easy to use.

Still another object of the present invention is to provide a device for chopping thereon food materials which, in use, keeps a chopping board in no contact with a kitchen sink top or dresser or any other surface on which the device is rested, whereby a bottom surface of the chopping board remains to be sanitary and clean during use of a top surface of the chopping board and therefore is ready to be used as a second chopping surface after the board is reversed.

Yet still another object of the present invention is to provide a holder for use in combination with a reversible chopping board.

According to an aspect of the present invention, there is provided a device for chopping thereon food materials comprising a reversible board having first and second chopping surfaces on opposite sides thereof; a tray for detachably receiving the board; and a plurality of spaced support members formed internally of the tray for supporting thereon peripheral portions of the board; the tray defining an internal space adapted to receive any liquid overflowing the first chopping surface through interstices between the support members.

According to a preferred embodiment of the present invention, a peripheral wall of the tray is partly cut out to define at least one channel that allows the liquid received in the internal space of the tray to be discharged therethrough and also allows operator's finger or fingers to be inserted therethrough to lift up the board out of the tray.

According to another preferred embodiment of the present invention, the tray is substantially rectangular in cross-section when taken along horizontal plane and opposite two peripheral walls are at least partly cut out to form two opposite channels that allow the liquid received in the internal space of the tray to be discharged therethrough and also allow operator's finger or fingers to be inserted therethrough to lift up the board out of the tray. Preferably, the channel extends outwardly and upwardly to form sloped surfaces.

In a preferable embodiment, the support members are formed internally of one pair of opposed peripheral walls of the tray having a substantially rectangular cross-section when taken along horizontal plane, and guide members are formed internally of another pair of opposed peripheral walls. The guide members have guide surfaces lower than support surfaces of the support members to guide the board into a predetermined position wherein the board is supported by the support members within the tray. Preferably, the support members are formed internally of a longer pair of the peripheral walls and the guide members are formed on a shorter pair of the peripheral walls.

The upper end of the peripheral wall of the tray may extend outwardly and upwardly to form a sloped flange.

The board may be provided with one or more of apertures. Particularly, the apertures may be longitudinally extending spaced, parallel ones, in which case the board seems like a drain board.

In accordance with another aspect of the present invention, there is provided a device for chopping thereon food materials comprising a reversible board having first and second chopping surfaces on opposite sides thereof; a tray having a substantially rectangular bottom; first and second pairs of peripheral walls integrally extending upwardly from the periphery of the bottom; an upper flange integrally extending outwardly and upwardly from the upper end of the peripheral walls; all internal space defined and surrounded by the peripheral walls; a plurality of spaced support members formed internally of the first pair of the peripheral walls to support thereon the board; a plurality of spaced guide members formed internally of the second pair of the peripheral walls to provide guide surfaces lower than support surfaces of the support members; and anti-skid members mounted to or around the bottom of the tray. When the board is placed in position, the board is in contact with the support surfaces and any liquid appearing on the top of the board is allowed to flow into the internal space through interstices between the support members. Preferably, there are a pair of lower level portions at one of the first and second pairs of the peripheral walls of the tray to provide relatively large channels between the tray and the board supported by the support members, which makes it easy to lift up the board as well as to drain the liquid received in the internal space.

In accordance with another aspect of the present invention, there is provided a holder for use in combination with a reversible chopping board, comprising an open tray having a bottom and a peripheral wall to provide an internal space adapted to receive liquids; a plurality of spaced support members formed internally of the peripheral wall of the tray to support peripheral portions of the board; and at least one trough formed as a part of the peripheral wall of the tray and having a lower level than the remaining part of the peripheral wall of the tray. The tray may be substantially rectangular in cross-section when taken along horizontal plane. In this case, preferably, opposite two peripheral walls are at least partly cut out to form two opposed troughs. The trough(s) of the tray allows the liquid received in the internal space of the tray to be discharged therethrough to the outside and also allow operator's finger or fingers to be inserted therethrough to lift up the board supported on the support members. Preferably, the trough(s) extends outwardly and upwardly to form sloped surfaces.

In a preferable embodiment, the support members are formed internally of one pair of opposed peripheral walls of the tray having a substantially rectangular cross-section when taken along horizontal plane, and guide members are formed internally of another pair of opposed peripheral walls. The guide members have guide surfaces lower than support surfaces of the support members to guide the board into a predetermined position supported by the support members within the tray. Preferably, the support members are formed internally of a longer pair of the peripheral walls and the guide members are formed internally of a shorter pair of the peripheral walls.

The upper end of the peripheral wall of the tray may extend outwardly and upwardly to form a sloped flange.

### BRIEF DESCRIPTION OF THE DRAWINGS

The foregoing and other objects and features of the present invention can be apparent from the following description when read in conjunction with the accompanying drawings in which:
Fig. 1 is a schematic view showing an embodiment of the present invention;
Fig. 2 is a top view of a tray of the embodiment shown in Fig. 1;
Fig. 3 is a cross-sectional view taken along the lines A-A in Fig. 2;
Fig. 4 is a cross-sectional view taken along the lines B-B in Fig. 2;
Fig. 5 is a cross-sectional view, similar to Fig. 3, but on an enlarged scale, showing the tray together with a chopping board placed thereon (shown by phantom lines); and
Fig. 6 is a perspective view of another example of the chopping board.

### DETAILED DESCRIPTION OF PREFERRED EMBODIMENTS

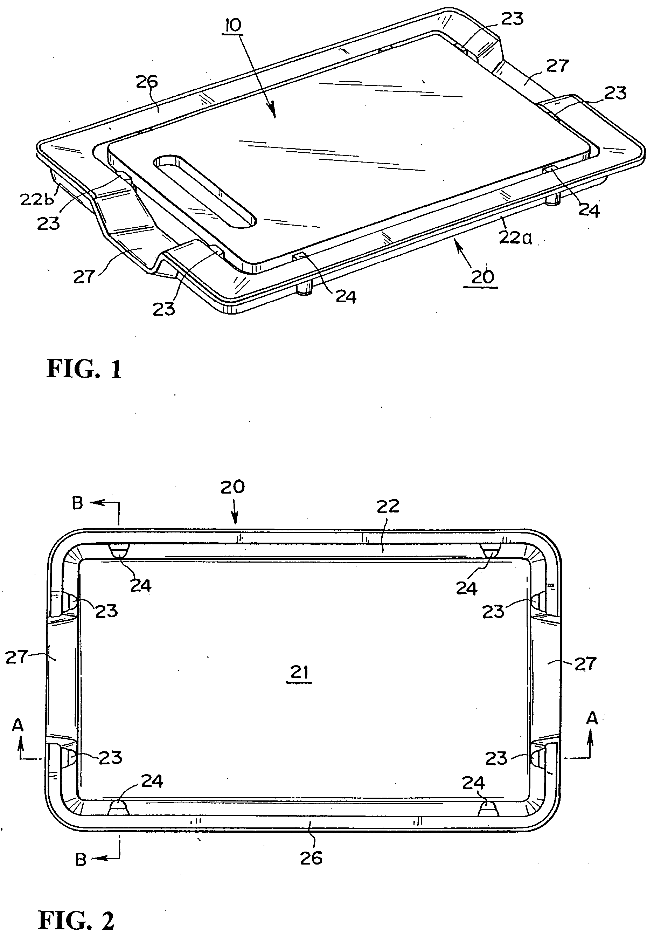

Fig. 1 is shows a device embodying the present invention comprising a reversible chopping board 10 having flat chopping surfaces on both sides thereof and a tray or holder 20 for detachably supporting board 10. Without limitation, tray 20 may be made by injection molding of hard plastic material. In the illustrated embodiment, tray 20 has all open top adapted to accommodate board 10 of a generally rectangular shape having rounded corners. Board 10 may be made of any material such as wood or plastic material, and preferably by any known anti-bacterial materials. It is also preferable that both surfaces of board 10 are subjected to anti-bacterial treatment. Anti-slime treatment may be processed to the surfaces of tray 20.

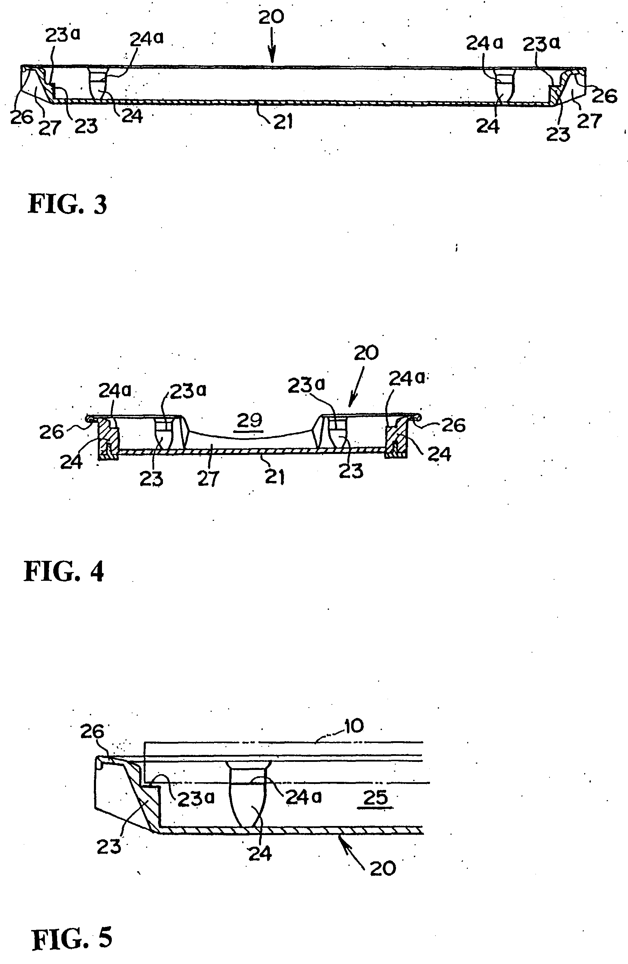

Referring specifically Figs. 2-5 in addition to Fig. 1, tray 20 has a generally rectangular bottom 21 and a peripheral side wall 22 extending outwardly and upwardly from the periphery of bottom 21. Thus, tray 20 has an increasing cross-section, taken along horizontal planes, from the bottom to the top. Wall 22 comprises a pair of longer opposite walls 22a, 22a and another pair of shorter opposite walls 22b, 22b. Internally of longer walls 22a, 22a are formed respectively two spaced support members 24, 24 having support surfaces 24a, 24a for supporting thereon board 10. On the other hand, internally of shorter walls 22b, 22b are formed respectively two spaced guide members 23, 23 having guide surfaces 23a, 23a at a level slightly lower than support surfaces 24a, 24a. Therefore, when board 10 is received and held in tray 20, it is supported by support members 24, 24 with face-to-face contact between its peripheral portions and support surfaces 24a, 24a but in no contact with guide surfaces 23a, 23a, as can be clearly seen in Fig. 5. When board 10 is held in position by support members 24, 24, there is a predetermined distance between bottom 21 and the underside of board 10 to define an internal space 25 (Fig. 5) in tray 20.

The upper end of peripheral wall 22 extends outwardly and slightly upwardly to integrally form a flange 26. When board 10 is used to chop some food material, especially wet vegetables or juicy fruits, water, juice or any other liquid could splash toward surroundings of board 10. Flange 26 will serve as a supplementary tray for temporarily receiving the splashed liquid. The liquid once received on flange 26 flows along its slope to be introduced into internal space 25 through interstices between adjacent two of support members24, 24. Flange 26 may also be used as a grip that makes it easy to lift tray 20 alone or together with board 10.

The upper edges of shorter walls 22b, 22b are concaved at center portions located between guide members 23, 23, from which a pair of opposite troughs 27, 27 extends outwardly and upwardly. Troughs 27, 27 are formed integral with flange 26 and have lower surfaces than flange 26 so that there are formed channels 29, 29 (Fig. 4) between troughs 27, 27 and board 10 held in position within tray 20. More particularly, an user may insert his or her finger(s) through channels 29, 29 to the underside of board 10, making it easy to lift or remove board 10 out of tray 20. When tray 20, even with board 10 being held therein, is leaned in the afore-mentioned manner so that one of troughs 27 is faced down, the liquid collected in space 25 may be discharged to a kitchen sink, for example, through channel 29 formed between said trough 27 and board 10.

Leg members 28 are fitted around peripheral wall 22 of tray 20 and extends to below bottom 21. In this embodiment leg members 28 extends substantially in alignment with support members 24 and therefore efficiently bears the total weight of board 10 mounted thereon. Leg members 28 may be of any suitable material but preferably should have elastic material such as rubber at least at its bottom end to provide anti-skid function. Anti-skid treatment or a separate anti-skid member may be applied to the bottom end of each leg member 28. Alternatively, anti-skid treatment or anti-skid member(s) may be applied directly to the underside of bottom 21 of tray 20, when leg members 28 are omitted. With the anti-skid function, even when chopping a pumpkin or any food material that is hard to cut by a knife on the chopping surface of board 10, tray 20 remains at a standstill, making it possible to chop the food material in safety.

As clearly noted from the foregoing, in cooking, the device is used with board 10 received in tray 20. Board 10 is supported on and contacts only with support surfaces 24a of support members 24. There are great intervals between support members 24. Therefore, any liquid (this term includes chips, crumbs or wastes of food material generated by chopping throughout the description) appearing on the top surface of board 10, for example, water droplets adhered to board 10 after washing and a quantity of water or juice generated or squeezed when a wet vegetable or a juicy fruit is chopped up on the top surface of board 10, may be introduced to flow into internal space 25 and will not wet or contaminate the kitchen. As described before, inclined surfaces of flange 26 and troughs 27 that surround the periphery of board 10 will temporarily receive the liquid overflowing board 10 and then flow it back toward the interstices between support members 24, and finally into space 25. The liquid received in space 25 may easily be discharged to the kitchen sink, for example, along one of troughs 27 by lilting the other trough 27 or an area of flange 26 adjacent thereto so that tray 20 is leaned, with or without board 10.

The underside of board 10 contacts only with support surfaces 24a of support members 24 at peripheral portions thereof and is free from contact with bottom 21 of tray 20 to leave a sufficient distance therebetween, which defines space 25 for receiving a quantity of the liquid. Accordingly, board 10 remains sanitary and clean unless the upper level of the liquid in space 25 reaches the underside thereof.

When, for example, the device is used for chopping meat or fish on one surface of board 10, it is likely that the user wishes to use another clean surface (namely the underside) of board 10 for chopping another food material, say fresh salad vegetables. To achieve this, the user should take a grip on one or both end portions of board 10 through channels 29, turning board 10 upside down and again placing board 10 onto support members 24 so that the clean surface of board 10 now appears on the top of the device, which may readily be used as a second chopping surface. The first chopping surface that has been contaminated by chopped and minced meat or fish will be the underside of the reversed board 10, which disappears inside of tray 20 and, therefore, will not contaminate the kitchen sink or dresser or other ground on which tray 20 rests.

After use, board 10 is removed out of tray 20, carefully washed and rinsed, again fitted within tray 20 and placed anywhere the user want. Again, since the underside of board 10 remains in no contact with bottom 21 of tray 20, both surfaces are exposed to air, which facilitates wet board 10 to be dried in a relatively short period of time and prevents this from being molded and mildewed. Both surfaces of board 10 keeps a sufficient level of sanitariness and cleanliness obtained by washing.

Board 10 is also easy to be disinfected and sterilized in safety. More particularly, hot water is poured onto the surface of board 10 held in tray 20 while tray 20 is leaned and rested against the wall of the kitchen sink. In bleaching, a bleaching liquid may easily and evenly applied to the surface of board 10 while tray 20 holding board 10 is stably placed on a horizontal level of the kitchen counter top, for example. The overflowing bleaching liquid is introduced into space 25 through gaps between support members 24 and does not contaminate the counter top.

Guide members 23 formed internally of the shorter sides 22b of tray 20 will guide the shorter end portions of board 10 along guide surfaces 23a into a proper position. Since guide surfaces 23a is slightly lower than support surfaces 24a, once board 10 is fitted within tray 20, the underside of board is free from contact with guide surfaces 23a. Board 10 is stably supported by four (in the illustrated embodiment) support surfaces 24a of support members 24. Moreover, this arrangement provides, small clearances between board 10 and guide surfaces 23a, which also allows the liquid to overflow therethrough into space 25.

In the illustrated embodiment board 10 has a transverse slot 11 as in most of the prior art ones. However, since, in accordance with the resent invention, the butt end portions of board 10 are exposed to the outside of tray 20 through channels 29 and therefore easy to be gripped to lilt up board 10, slot 11 is not always necessary. Omitting slot 11 will not only reduce the production cost of board 10 but also provide a greater chopping surface.

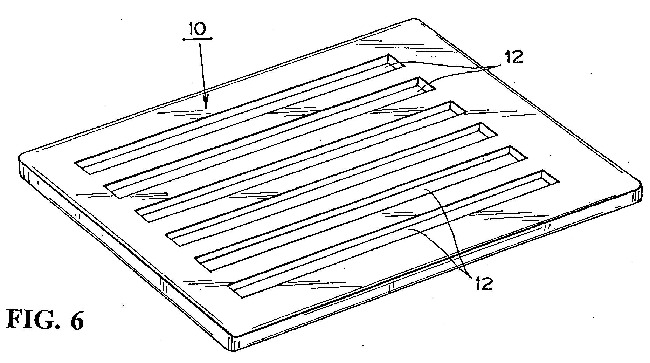

Board 10 may have one or more of apertures 12 penetrating from one side to the other side, as shown in Fig. 6. Although board 10 shown in Fig. 6 has a plurality of spaced, parallel extending longitudinal apertures 12, like a drain board, there is no limitation regarding shape and layout of apertures 12. Another example of board 10 has latticed apertures, though not shown. Apertured board 10 should preferably be made of wooden material to compensate for a sufficient strength and rigidity.

Apertured board 10 is particularly suitable when used to slice bread thereon. Most of bread crumbs appearing on a chopping surface of board 12 will automatically fall down through apertures 12 into space 25. The crumbs remaining on the chopping surface may easily be introduced toward apertures 12 by leaning or vibrating tray 20 or sweeping them away by hand. Crumbs collected in space 25 are easy to dump into a dust bin. Drain board 10 shown in Fig. 6 having longitudinally extending apertures 12 is suitable to crosscut of a stick-like bread such as a French bread, in which case a knife is used in a direction substantially perpendicular to apertures 12.

Although the present invention has been described in connection with specific embodiments, it is to be understood that the present invention is not limited to these illustrated embodiments and that various changes and modifications may be effected therein by one skilled in the art without departing from the spirit and the scope of the invention as defined in the appended claims.

## Claims

1. A device for chopping food materials thereon comprising a reversible board (10) having first and second chopping surfaces oil opposite sides thereof, a tray (20) for detachably receiving said board (10); and a plurality of spaced support members (24) formed internally of said tray (20) for supporting thereon peripheral portions of said board (10); said tray (20) defining an internal space (25) adapted to receive any liquid overflowing said chopping surfaces through interstices between said support members (24).

2. A device according to Claim 1, wherein a peripheral wall (22) of said tray is partly cut out to define at least one channel (29) that allows said liquid received in said internal space (25) of said tray to be discharged therethrough and also allows operator's finger or fingers to be inserted therethrough to lift up said board (10) out of said tray (20).

3. A device according to Claim 1 or 2, wherein said tray (10) is substantially rectangular in cross-section when taken along horizontal plane and opposite two peripheral walls (22b) of said tray (10) are at least partly cut out to form two opposite channels (29) that allow said liquid received in said internal space (25) of said tray to be discharged therethrough and also allow operator's finger or fingers to be inserted therethrough to lift up said board (10) out of said tray.

4. A device according to Claim 2 or 3, wherein said channel (29) extends outwardly and upwardly to form sloped surfaces (27).

5. A device according to any one of Claims 1 to 4, wherein said support members (24) are formed internally of one pair of opposed peripheral walls (22a) of said tray having a substantially rectangular cross-section when taken along horizontal plane, and guide members (23) are formed internally of another pair of opposed peripheral walls (22b).

6. A device according to Claim 5, wherein said guide members (23) have guide surfaces (23a) disposed lower than the support surfaces (24a) of said support members (24) to guide said board (10) into a predetermined position, wherein said board (10) is supported by said support members (24) within said tray (10).

7. A device according to any one of the Claims 2 to 6, wherein said support members (24) are formed internally of a pair of longer peripheral walls (22a) and guide members (23) are formed on a pair of shorter peripheral walls (22b).

8. A device according to any one of the Claims 2 to 6, wherein an upper end of said peripheral wall (22) of said tray extends outwardly and upwardly to form a sloped flange (27).

9. A device according to any one of the Claims 1 to 8, wherein said board (10) is provided with one or more of apertures (12).

10. A device according to Claim 9, wherein said apertures (12) comprise a plurality of elongate openings disposed parallel to one another.

11. A device for chopping food materials thereon comprising a reversible board (10) having first and second chopping surfaces on opposite sides thereof, a tray (20) having a substantially rectangular bottom (21); first and second pairs of peripheral walls (22a, 22b) integrally extending upwardly from said bottom (21); an upper flange (26) integrally extending outwardly and upwardly from said peripheral walls (22a, 22b); an internal space (25) defined and surrounded by said peripheral walls (22); a plurality of spaced support members (24) formed internally of said first pair (22a) of said peripheral walls to support thereon said board; a plurality of spaced guide members (23) formed internally of said second pair (22b) of said peripheral walls to provide guide surfaces (23a) lower than support surfaces (24a) of said support members; and anti-skid members mounted to or around said bottom (21) of said tray, said board (10) being in contact with said support surfaces (24a) and any liquid appearing on said top of said board (10) is allowed to flow into said internal space (25) through interstices between said support members (24), when said board is placed in position.

12. A device according to Claim 11, which further comprises a pair of lower level portions (27) in one of said first and second pairs of said peripheral walls (22a, 22b) of said tray to provide relatively large channels (29) between said tray (20) and said board (10) supported by said support members (24).

13. A holder for use in combination with a reversible chopping board, comprising an open tray (20) having a bottom (21) and a peripheral wall (22) to provide an internal space (25) adapted to receive liquids; a plurality of spaced support members (24) formed internally of said peripheral wall (22) to support peripheral portions of said board (10); and at least one trough (27) formed as a part of said peripheral wall (22) of said tray and having a lower level than the remaining part of said peripheral wall (22) of said tray.

14. A holder according to Claim 13, wherein said tray (20) is substantially rectangular in cross-section when taken along horizontal plane.

15. A holder according to Claim 13 or 14, wherein two opposite peripheral walls (22b) of said tray are at least partly cut out to form two opposed troughs (27).

16. A holder according to Claim 13, wherein said trough (27) allows said liquid received in said internal space (25) to be discharged therethrough and also allow operator's finger or fingers to be inserted therethrough to lift up said board (10) supported on said support members (24).

17. A holder according to any one of the Claims 13 to 16, wherein said trough extends outwardly and upwardly to form sloped surfaces.

18. A holder according to any one of the Claims 13 to 17, wherein said support members (24) are formed internally of one pair of opposed peripheral walls (22a) of said tray having a substantially rectangular cross-section when taken along horizontal plane, and guide members (23) are formed internally of the other pair of opposed peripheral walls (22b).

19. A holder according to Claim 18, wherein said guide members (23) have guide surfaces (23a) disposed lower than the support surfaces (24a) of said support members (24) to guide said board (10) into a predetermined position supported by said support members (24) within said tray (20).

20. A holder according to Claim 18, wherein said support members (24) are formed internally of a longer pair (22a) of said peripheral walls and said guide members (23) are formed internally of a shorter pair (22b) of said peripheral walls.

21. A holder according to any one of the Claims 13 to 20, wherein an upper end of said peripheral wall (22) of said tray extends outwardly and upwardly to form a sloped flange (26).
